# EUROPÄISCHE PATENTANMELDUNG

(11) **EP 3 012 039 A1**
(43) Veröffentlichungstag der Anmeldung: **27.04.2016**
(21) Anmeldenummer: 14190033.2
(22) Anmeldetag: 23.10.2014
(51) Int. Cl.: B21H 3/10, B23B 51/02

(54) **Wendelbohrer und Herstellungsverfahren**

(71) Anmelder: HILTI Aktiengesellschaft, 9494 Schaan (LI)
(72) Erfinder: Achleitner, Corinna, 7320 Sargans (CH); Winkler, Mark, 6845 Hohenems (AT); Domani, Guenter, 88138 Weissensberg (DE); Peters, Carsten, 9468 Sax (CH)
(74) Vertreter: Hilti Aktiengesellschaft Corporate Intellectual Property

(57) **Zusammenfassung**

Ein Herstellungsverfahren für einen Wendelbohrer **1** hat folgende Schritte. Ein Rohling **27** wird zu einem Halbling **34** umgeformt. Der Halbling **34** ist aus einem zur Bohrerachse **2** koaxialen Kern **38** mit einem Radius **51** und einer Anzahl von auf dem Kern **38** angeordneten Stegen **39** mit einer Höhe **40** gebildet. Der Halbling **34** hat einen längs der Bohrerachse **2** gleichbleibenden Querschnitt. Die Stege **39** haben einen ersten Abschnitt **42,** der an den Kern **38** angrenzt und in welchem eine Breite **44** des Stegs **39** in Umfangsrichtung **11** mit zunehmendem radialen Abstand zu der Bohrerachse **2** gleichbleibt oder abnimmt. Die Stege **39** haben einen zweiten Abschnitt **43,** der an den ersten Abschnitt **42** angrenzt und in welchem die Breite **44** des Stegs in Umfangsrichtung **11** mit zunehmendem radialen Abstand zu der Bohrerachse **2** zunimmt. Die Stege **39** des Halblings werden in helixförmige Segmente mit mehreren den Halbling **34** ringförmig umschließenden und längs der Bohrerachse **2** auf den Stegen **39** rollenden Walzwerkzeugen umgeformt. Die Walzwerkzeuge **31** haben gegenüber der Bohrerachse **2** geneigte Zähne **48.** Eine Höhe **20** der helixförmigen Segmente ist geringer als die Höhe **40** der Stege **39.** Aus benachbarten Stegen **39** gebildete helixförmige Segmente berühren einander in einer Schließfalte **26.** Die Efindung betrifft auch einen Wendelbohrer.

## Beschreibung

### GEBIET DER ERFINDUNG

Die vorliegende Erfindung betrifft ein Herstellungsverfahren für einen Wendelbohrer und einen Wendelbohrer, der mehrere Wendelstege aufweist.

### OFFENBARUNG DER ERFINDUNG

Das erfindungsgemäße Herstellungsverfahren für einen Wendelbohrer hat folgende Schritte. Ein Rohling wird zu einem Halbling umgeformt. Der Halbling ist aus einem zur Bohrerachse koaxialen Kern mit einem Radius und eine Anzahl von auf dem Kern angeordneten Stegen mit einer Höhe gebildet. Der Halbling hat einen längs der Bohrerachse gleichbleibenden Querschnitt. Die Stege haben einen ersten Abschnitt, der an den Kern angrenzt und in welchem eine Breite des Stegs in Umfangsrichtung mit zunehmendem radialen Abstand zu der Bohrerachse gleichbleibt oder abnimmt. Die Stege haben einen zweiten Abschnitt, der an den ersten Abschnitt angrenzt und in welchem die Breite des Stegs in Umfangsrichtung mit zunehmendem radialen Abstand zu der Bohrerachse zunimmt. Die Stege des Halblings werden in helixförmige Segmente mit mehreren den Halbling ringförmig umschließenden und längs der Bohrerachse auf den Stegen rollenden Walzwerkzeugen umgeformt. Die Walzwerkzeuge haben gegenüber der Bohrerachse geneigte Zähne. Eine Höhe der helixförmigen Segmente ist geringer als die Höhe der Stege. Aus benachbarten Stegen gebildete helixförmige Segmente berühren einander in einer Schließfalte.

Das Umformen des Rohlings erfolgt in wenigstens zwei Stufen. Während einer ersten Stufe wird das Material des vorzugsweise zylindrischen Rohlings aus einem Winkelbereich zu Stegen zusammengeschoben. Die entstehenden Stege haben eine pilzförmige Gestalt, deren äußeren Kopf eine große Materialmenge enthält. Während einer zweiten Stufe wird der Steg längsgewalzt. Das Material aus dem Kopf wird gelenkt durch die Walzwerkzeuge wieder in den zuvor freigelegten Winkelbereich zurückgeschoben. Die geneigten Zähne schieben einerseits das Material und unterbinden einen Materialfluss in die späteren Wendelgänge. Das Material häuft sich dadurch in den helixförmigen Segmenten. Benachbarte Walzwerkzeuge schieben beide Teile ihres Materials in einen zwischen den umzuformenden Stegen liegenden Winkelbereich. Die beiden helixförmigen Segmente stoßen in Umfangsrichtung aufeinander und bilden eine durchgehende Wendel. In der Wendel bleibt eine Schließfalte zurück, an welcher die Segmente aufeinander stoßen.

Die Schließfalten können in Ebenen liegen, die die Bohrerachse enthalten und mittig zwischen benachbarten Stegen angeordnet sind. Der Materialfluss von beiden Stegen in und gegen eine Umlaufsrichtung ist durch eine symmetrische Auslegung der Walzwerkzeuge in etwa gleich.

Der Kopf des Stegs enthält vorzugsweise viel Material, welches während des Walzens der helixförmigen Segmente umverteilt werden kann. Eine Ausgestaltung sieht vor, dass in dem Querschnitt eine Fläche des ersten Abschnitts geringer als eine Fläche des zweiten Abschnitts ist.

Der Kopf überragt in radialer Richtung die herzustellende Wendel, damit die Walzwerkzeuge Material über die gesamte Länge des Stegs in die Winkelbereiche zwischen den Stegen umverteilen können. Die Höhe der Stege ist vorzugsweise wenigstens 20 % größer und höchstens 100 % größer als die Höhe der helixförmigen Segmente.

Eine Ausgestaltung sieht vor, dass die Anzahl der Stege gleich oder größer der Anzahl der Wendelrücken ist. Vorzugsweise ist die Anzahl gleich.

Ein erfindungsgemäßer Wendelbohrer hat einen Bohrkopf und eine Wendel. Die Wendel beinhaltet einen eine Bohrerachse definierenden zylindrischen Kern und eine Anzahl mit dem Kern verbundener helixförmiger Wendelstege. Die Wendelstege sind jeweils aus mehreren Segmenten gebildet, die einander entlang parallel zu der Bohrerachse verlaufender Schließfalten berühren. Die Schließfalten können in einer die Bohrerachse enthaltenden Ebene liegen. Der Kern entspricht in üblichem Verständnis bei einer Wendel, dem größten Zylinder, der in die Wendel eingeschrieben werden kann.

Eine Ausgestaltung sieht vor, dass eine Höhe der Schließfalte gleich der Höhe des Wendelstegs ist. Die Schließfalte beginnt bei dem zylindrischen Kern.

Eine Ausgestaltung sieht vor, dass Segmente einer ersten von zwei Gruppen der Segmente durch eine in den Drehsinn des Wendelbohrers weisende Flanke und eine der Schließfalten begrenzt sind und Segmente einer zweiten der zwei Gruppen der Segmente durch eine in entgegen dem Drehsinn weisende Flanke und eine der Schließfalten begrenzt sind.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Wendelbohrer
- Fig. 2: einen Querschnitt durch eine Wendel des Wendelbohrers in der Ebene II-II
- Fig. 3: einen Querschnitt durch eine Wendel des Wendelbohrers in der Ebene III-III
- Fig. 4: einen Querschnitt durch eine Wendel des Wendelbohrers in der Ebene IV-IV
- Fig. 5, 6: ein Walzgerüst
- Fig. 7: ein Halbling im Querschnitt
- Fig. 8, 9: ein Walzgerüst

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

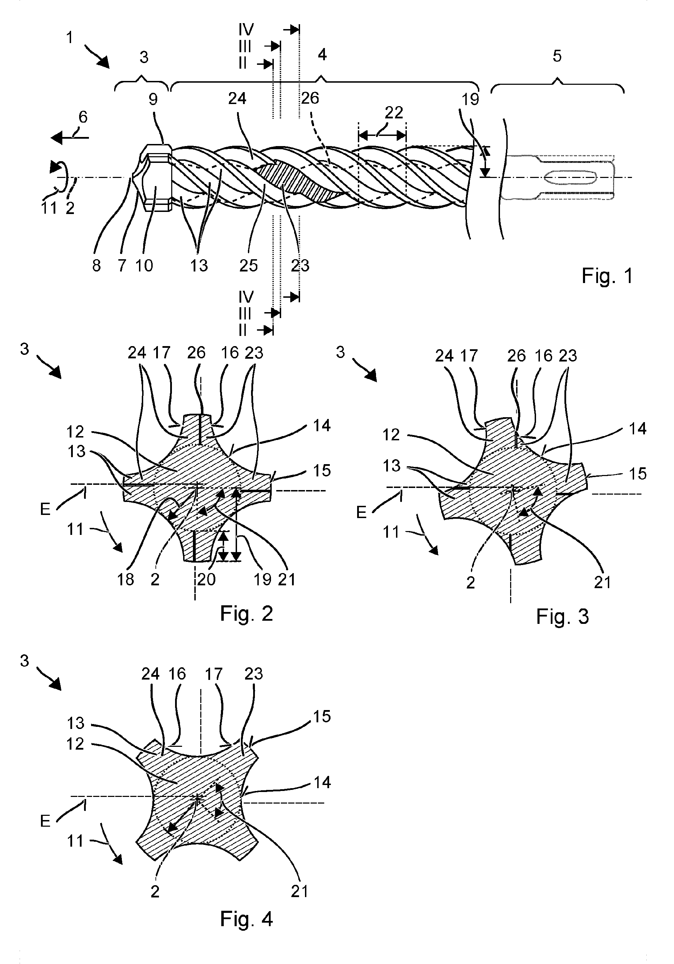

Fig. 1 zeigt schematisch vereinfacht einen beispielhaften Wendelbohrer **1.** Der Wendelbohrer **1** hat längs einer Bohrerachse **2** aufeinanderfolgend einen Bohrkopf **3,** eine spiralförmige Wendel **4** und ein Einsteckende **5.**

Der dargestellte Wendelbohrer **1** ist für die Bearbeitung von Gestein ausgelegt, insbesondere für eine der Drehbewegung überlagerte Meißeltätigkeit. Der Bohrkopf **3** hat vier in Schlagrichtung **6** weisende Meißelkanten **7.** Die Meißelkanten **7** sind jeweils als Kreuzungslinie einer im Drehsinn des Wendelbohrers **1** vorauslaufenden Fläche und einer nachlaufenden Fläche gebildet, die beide gegenüber der Bohrerachse **2** geneigt und zueinander um wenigstens 60 Grad geneigt sind. Die Meißelkanten **7** verlaufen im Wesentlichen in radialer Richtung, z.B. ausgehend von einer Spitze **8** des Bohrkopfs **3** bis zu einem Rand des Bohrkopfs **3,** wo die Meißelkanten **7** vorzugsweise gegenüber der Spitze **8** in Schlagrichtung **6** zurückgesetzt sind. Eine Neigung der Meißelkanten **7** gegenüber der Bohrerachse **2** kann in radialer Richtung konstant sein oder im Bereich der Spitze **8** geringer als am Rand sein. Insbesondere kann die Meißelkante **7** am Rand senkrecht zu der Bohrerachse **2** verlaufen. An die in Schlagrichtung 6 weisenden Meißelkanten **7** schließt sich am Rand des Bohrkopfs **3** eine Abbruchkante **9** an, welche parallel zu der der Bohrerachse **2** verläuft. Die Abbruchkante **9** steht vorzugsweise radial über die Wendel 4 hinaus. Der Bohrkopf **3** ist an seinem Umfang mit parallel zur Bohrerachse **2** verlaufenden Abfuhrrinnen **10** versehen, entlang welchen das Bohrmehl aus dem Bohrloch transportiert werden kann. Die Abfuhrrinnen **10** sind in Umfangsrichtung **11** zwischen den Meißelkanten **7** angeordnet. Der Bohrkopf **3** ist vorzugsweise ein zusammenhängender Körper aus gesintertem Hartmetall, das z.B. Wolframkarbid und einen metallischen Binder enthält. Der dargestellte Bohrkopf **3** hat zwei Paare unterschiedlich ausgebildeter Meißelkanten, von denen die die Spitze **8** bildenden Meißelkanten als Hauptschneiden und das andere Paar als Nebenschneiden bezeichnet werden. Anstelle von vier kann der Meißelkörper auch zwei, z.B. nur die Hauptschneiden, oder drei oder mehr als vier Meißelkanten aufweisen.

Die Wendel **4** setzt sich aus einem massiven zylindrischen Wendelkern **12** und vier sich um den Wendelkern **12** windende Wendelstege **13** zusammen. Der Wendelkern **12** und die Wendelstege **13** sind ohne Naht miteinander verbunden. Eine Aufteilung der Wendel **4** in Wendelkern **12** und Wendelstegen **13** erfolgt basierend auf deren charakteristischen Formen. Die Wendelstege **13** definieren die gesamte Oberfläche der Wendel **4.** Die Wendelstege **13** haben eine von einem Wendelboden **14** bis zu einem Wendelrücken 15 in Umfangsrichtung 11 ansteigende Flanke **16** und in Umfangsrichtung **11** fallende Flanke **17.** Der Abstand des Wendelboden **14** zu der Bohrerachse **2** ist der Innenradius **18** der Wendel **4** und der Abstand des Wendelrückens **15** zu der Bohrerachse 2 ist der Außenradius **19** der Wendel **4.** Der Zylinder mit dem Innenradius **18,** d.h. der größte in die Wendel **4** einschreibbare Zylinders, ist der Wendelkern **12.** Die Volumina zwischen der Oberfläche und dem Wendelkern **12** werden den Wendelstegen **13** zugeordnet. Eine Höhe **20** der Wendelstege **13** ist die Differenz des Außenradius **19** und des Innenradius **18** der Wendel.

Die Wendel **4** hat drei, vier, fünf oder sechs Wendelstege **13.** Die Wendelstege **13** ist vorzugsweise identisch ausgebildet. Bei vier Wendelstegen **13** können beispielsweise zwei Wendelstege eine geringere Höhe als die anderen zwei Wendelstege **13** aufweisen. Die Wendelstege **13** sind vorzugsweise gleichmäßig um die Bohrerachse **2** verteilt angeordnet. Eine Winkelabstand **21** der Wendelstege **13,** gemessen in einem zu der Bohrerachse **2** senkrechten Querschnitt (Fig. 2), ist der der Anzahl der Wendelstege **13** entsprechende Bruchteil des Vollkreises, z.B. 90 Grad. Die Wendel **4** hat eine ganzzählige Drehsymmetrie, z.B. vierzählige Drehsymmetrie. Eine Ganghöhe **22** der Wendel **4** ist der axiale Abstand zweier benachbarter Wendelstege **13,** gemessen in einem zur Bohrerachse **2** parallelen Längsschnitt. Die Ganghöhe **22** ist vorzugsweise konstant. Die Wendel **4** ist entsprechend längs der Bohrerachse **2** periodisch.

Fig. 2 zeigt einen ersten Querschnitt durch die Wendel **4,** Fig.3 zeigt einen zweiten Querschnitt etwa um ein Achtel der Ganghöhe **22** zu dem ersten Querschnitt versetzt, und Fig. 4 zeigt einen dritten Querschnitt etwa um die Hälfte der Ganghöhe **22** zu dem ersten Querschnitt versetzt. Die beispielhafte Wendel **4** dreht sich von dem ersten Querschnitt zu dem zweiten Querschnitt um etwa 12 Grad, von dem ersten Querschnitt zu dem dritten Querschnitt um 45 Grad.

Die Wendelstege **13** sind sowohl in Umfangsrichtung **11** als auch längs der Bohrerachse **2** mehrfach in Segmente **23, 24, 25** unterteilt. Ein beispielhaftes Segment **23** ist schraffiert in Fig. 1 hervorgehoben. Die Segmente **23, 24, 25** sind bei dem beispielhaften Bohrer identisch ausgebildet. Die Segmente **23** grenzen aneinander in Umfangsrichtung **11** und längs der Bohrerachse **2** aneinander an. Die längs der Bohrerachse **2** benachbarten Segmente **23, 25** sind verschiedenen Wendelstegen **13** zugeordnet. Die Segmente **23** sind längs der Bohrerachse **2** durch den Wendelboden **14** begrenzt.

Die Unterteilung der Wendelstege **13** in die Segmente **23, 24** erfolgt in Umfangsrichtung **11** durch Schließfalten **26,** die sich über die gesamte Länge der Wendel **4** und die gesamte Höhe **20** der Wendelstege **13** erstrecken. Die Schließfalten **26** sind weitgehend eben und liegen in vier Ebenen **E.** Die Ebenen **E** sind parallel zu der Bohrerachse **2** und können diese wahlweise enthalten oder haben einen Abstand zu der Bohrerachse **2,** der deutlich geringer als der Innenradius **18** ist, z.B. geringer als 10 % des Innenradius **18.** Die Ebenen **E** stehen unter gleichen Winkeln, z.B. senkrecht aufeinander.

Die benachbarten Segmente **23, 24** berühren einander in der Schließfalte **26.** Die Schließfalte **26** stellt eine Unterbrechung in dem Materialgefüge von dem einem der Segmente **23** zu dem benachbarten Segment **24** dar. Jedoch sind die beiden Segmente **23** mechanisch in Kontakt, d.h. berühren sich. Es gibt keinen Luftspalt zwischen den Segmenten **23, 24.** Die Schließfalte **26** kann beispielsweise in einem Schliff quer zur Bohrerachse **2** sichtbar gemacht werden. Beispielsweise kann durch Ätzen des Schliffs die Schließfalte **26** hervorgehoben werden.

Das nachfolgend beschriebene Herstellungsverfahren für den Wendelbohrer **1** befasst sich hauptsächlich mit der Herstellung der Wendel **4.** Die beschriebene Fertigung des Einsteckendes **5** und die Herstellung oder das Anbringen des Bohrkopfs **3** sind nur bevorzugte Beispiele.

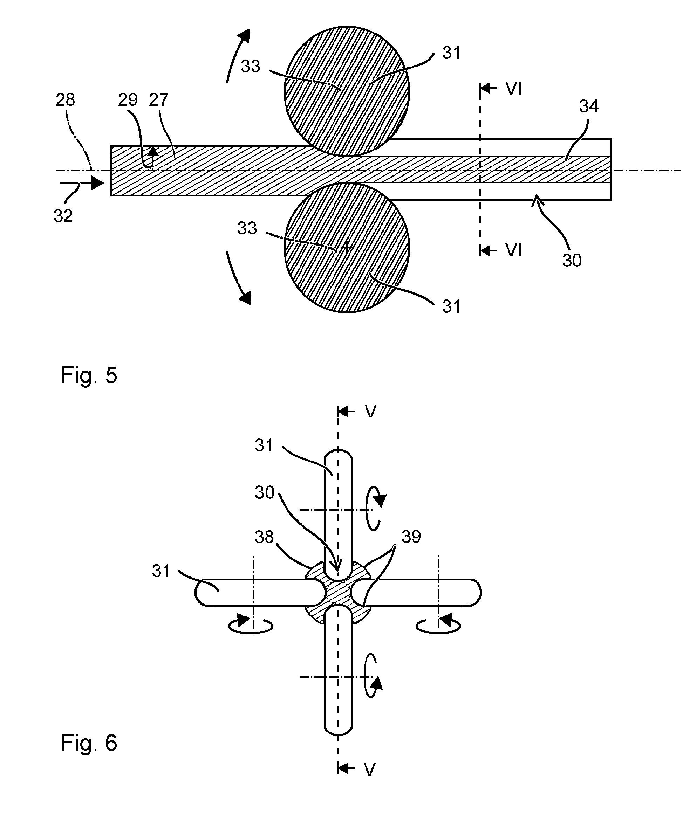

Fig. 5, 6 zeigen schematisch einen Bearbeitungsschritt eines Rohlings **27** in Längsschnitt V-V bzw. Querschnitt VI-VI. Der Rohling **27** ist beispielsweise ein zylindrischer Draht mit einem längs der Rohlingsachse **28** gleichbleibenden Radius **29.** Der Querschnitt des Rohlings **27** ist zwecks einfacherer Beschaffung vorzugsweise kreisförmig, kann jedoch auch eine andere näherungsweise kreisförmige Gestalt, z.B. polygonal, oval aufweisen. Das dargestellte Herstellungsverfahren längt den Rohling **27** vor den nachfolgenden Umformungsschritten auf eine gewünschte Länge, z.B. die Länge der Wendel **4** oder die Länge des Wendelbohrers **1** einschließlich des Einsteckendes 5. Bei einer bevorzugten Variante wird die Wendel **4** zuerst in den Rohling **27** eingeformt und nachfolgend die Wendel **4** auf die gewünschte Länge zugeschnitten.

Eine erste Umformungsstufe formt in den Rohling **27** mehrere Längsnuten **30** ein. Beispielsweise werden die vier Längsnuten **30** durch ein Walzgerüst mit vier rotierenden Walzwerkzeugen **31** in den Rohling **27** eingewalzt. Das Walzen erfolgt vorzugsweise mit einem Längswalzen, bei welchem der Rohling **27** in einer Vortriebsrichtung **32** parallel zu der Rohlingsachse **28** zwischen die Walzwerkzeuge **31** eingeführt wird. Die Walzwerkzeuge **31** rotieren um Achsen **33,** welche senkrecht zu der Vortriebsrichtung **32** sind. Die Längsnuten **30** haben einen längs der Rohlingsachse **28** konstanten Querschnitt. Vorzugsweise haben die Längsnuten **30** eine identische Form und sind gleichmäßig um die Rohlingsachse **28** verteilt angeordnet. Der aus dem Rohling **27** entstehende Halbling **34** hat eine entsprechend dem Querschnitt vierzählige Symmetrie um die Rohlingsachse **28.**

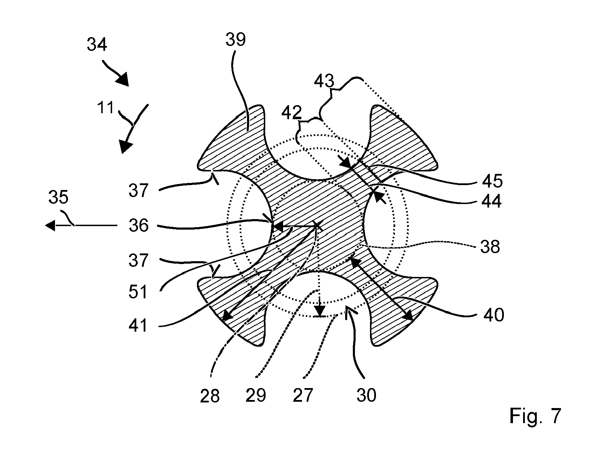

Fig.7 zeigt einen Querschnitt durch den Halbling **34.** Der Umriss des ursprünglichen Rohlings **27** ist gepunktet dargestellt. Die Längsnut **30** ist in einer Richtung **35** senkrecht zur Bohrerachse **2** hin geöffnet. Die Längsnut **30** weitet sich mit zunehmendem Abstand von der Bohrerachse **2** kontinuierlich auf. Die Längsnut **30** hat einen Boden **36** und zwei gegenüberliegende Wände **37.** Der Boden **36** kann wie dargestellt durchgehend kreisförmig oder elliptisch gekrümmt oder in einem mittleren Bereich eben sein. Die Wände **37** sind weitgehend eben. Die beispielhaften Wände **37** sind zueinander und zu der Richtung **35** parallel. Die Wände **37** können auch leicht zueinander geneigt, sich mit zunehmendem Abstand von der Rohlingsachse **28** voneinander entfernen.

Der Halbling **34** besteht aus einem zylindrischen Kern **38** und vier Stegen **39.** Der Radius **51** des Kerns **38** ist gleich dem Abstand des Bodens **36** der Längsnuten **30** zu der Rohlingsachse **28.** Die Stege **39** sind durch das Umformen entstanden. Eine Höhe **40** der Stege **39 ist** gleich der Differenz des Radius **51** zu dem Außenradius **41** des Halblings **34.**

Die Stege **39** haben vorzugsweise die gleiche Form, welche sich zwischen den Längsnuten **30** ausbildet. Die Form der Stege **39** ist pilz- oder trompetenförmig. Der Steg **39** hat einen inneren Abschnitt **42,** der an den Kern **38** angrenzt, und einen äußeren Abschnitt **43,** der an die von dem Kern **38** abgewandte Seite des inneren Abschnitts **42** angrenzt. Der Steg **39** hat eine von dem Abstand zu der Rohlingsachse **28** abhängige Breite **44.** Die Breite **44** bezeichnet die Abmessung in Umfangsrichtung **11** in einem Längenmaß, d.h. den Abstand zweier auf gegenüberliegenden Oberflächen liegender Punkte, die in einer zu der Rohlingsachse **28** senkrechten Ebene und in gleichen Abstand zu der Rohlingsachse **28** sind. Die Breite **44** nimmt in dem inneren Abschnitt **42** mit zunehmendem Abstand zu der Rohlingsachse **28** kontinuierlich ab. Die Steg **39** hat eine Taille **45,** d.h. dünnste Stelle. Der innere Abschnitt **42** endet an der Taille **45.** Der äußere Abschnitt **43** ist der Rest des Stegs **39** außerhalb der Taille **45,** d.h. in größerem Abstand zu der Rohlingsachse **28** wie die Taille **45.** Die Breite **44** nimmt in dem äußeren Abschnitt **43** angrenzend an die Taille **45 zu.** Die maximale Breite des äußeren Abschnitts **43** beträgt 150 % bis 250 % des Breite **44** der Taille **45.** Der Abstand der Taille **45** zu der Rohlingsachse **28** liegt zwischen 80 % und 125 % des Außenradius **19** der herzustellenden Wendel **4.**

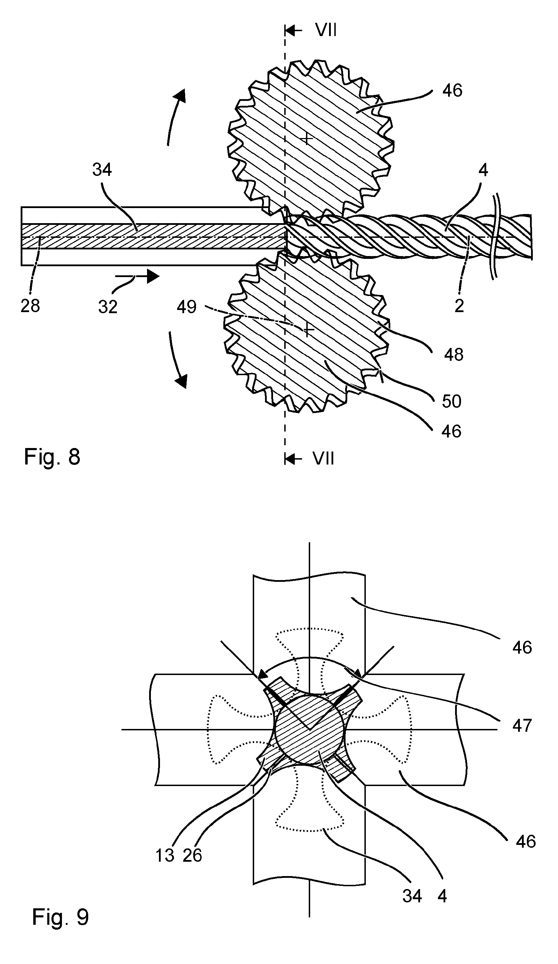

Der mit den Stegen **39** versehene Halbling **34,** wird einem zweiten Gerüst mit vier zweiten Walzwerkzeugen **46** zugeführt (Fig.8, 9). Das zweite Gerüst walzt die Stege **39** per Längswalzen in durchgehende, dargestellt vier, Wendelstege **13** um. Die Dreh- oder Schwenkachsen der Walzwerkzeuge **46** sind senkrecht zu der Vorschubrichtung und Bohrerachse **2** des Halblings **34.** Die zweiten Walzwerkzeuge **46** sind vorzugsweise gleich und um die Bohrerachse 2 vorzugsweise in äquidistanten Winkeln angeordnet. Jedes der Walzwerkzeuge **46** bearbeitet einen anderen Winkelabschnitt **47** des Halblings **34.** Die in Umfangsrichtung 11 benachbarten Walzwerkzeuge **46** berühren einander vorzugsweise derart, dass die Walzflächen einen geschlossenen Ring um die Bohrerachse **2** des Halbling **34** bilden. Ein axialer Abschnitt des Halblings **34** wird von allen Seiten gleichzeitig umgeformt und der axiale Abschnitt verschiebt sich fortlaufend längs der Bohrerachse **2.**

Der Halbling **34** kann dem zweiten Gerüst mit einer definierten Winkelorientierung zugeführt werden. Bei der dargestellten Ausführungsform ist das zweite Gerüst um 45 Grad gegenüber dem ersten Gerüst gedreht. Die Stege **39** sind jeweils mittig oder etwa mittig zu den Walzflächen. Das zweite Walzwerkzeug **46** formt somit einen der Stege **39** um. Entsprechend ist die Zahl der zweiten Walzwerkzeuge **46** gleich der Zahl der Stege **39.**

Die Walzwerkzeuge **46** haben eine Form analog einem schrägverzahnten Zahnrad mit mehreren Zähnen **48.** Eine Kopflinie **50** der Zähne **48** ist gegenüber der Drehachse **49** der Walzwerkzeuge **46 um** einen ein Neigungswinkel geneigt. Der Neigungswinkel liegt zwischen 35 Grad und 60 Grad und ist entsprechend der gewünschten Wendelsteigung gewählt. Die Zähne **48** haben, abweichend von einer prismatischen Gestalt, eine kreisförmig konkav gekrümmte Kopflinie **50.** Die Krümmung ist etwa gleich der Krümmung des herzustellenden Wendelbodens **14.** Eine Höhe der Zähne **48** nimmt längs der Drehachse vom Rand zu der Mitte hin monoton ab und danach bis zum Rand monoton zu. Die Zähne **48** berühren vorzugsweise beim Walzen den Kern **12** des Halblings **34** ohne diesen umzuformen. Das zweite Walzwerkzeug **46** formt hauptsächlich das Material in dem äußeren Abschnitt **43** der Stege **39** um.

## Patentansprüche

1. Herstellungsverfahren für einen Wendelbohrer (1) mit einer Wendel (4), die eine Anzahl (N) von in einer Wendelsteigung um eine Bohrerachse (2) verlaufende Wendelstege (13) aufweist, mit den Schritten:
Umformen eines Rohlings (27) zu einem Halbling (34), der, gebildet aus einem zur Bohrerachse (2) koaxialen Kern (38) mit einem Radius (51) und eine Anzahl von auf dem Kern (38) angeordneten Stegen (39) mit einer Höhe (40), einen längs der Bohrerachse (2) gleichbleibenden Querschnitt aufweist, wobei die Stege (39) angrenzend an den Kern (38) einen ersten Abschnitt (42), in welchem eine Breite (44) des Stegs (39) in Umfangsrichtung (11) mit zunehmenden radialen Abstand zu der Bohrerachse (2) gleichbleibt oder abnimmt, und angrenzend an den ersten Abschnitt (42) einen zweiten Abschnitt (43) aufweisen, in welchem die Breite (44) des Stegs in Umfangsrichtung (11) mit zunehmendem radialen Abstand zu der Bohrerachse (2) zunimmt,
Umformen der Stege (39) in helixförmige Segmente mit mehreren den Halbling (34) ringförmig umschließenden und längs der Bohrerachse (2) auf den Stegen (39) rollenden Walzwerkzeugen, welche gegenüber der Bohrerachse (2) geneigte Zähne (48) aufweisen, wobei eine Höhe (20) der helixförmigen Segmente geringer als die Höhe (40) der Stege (39) ist, und wobei aus benachbarten Stegen (39) gebildete helixförmige Segmente einander in einer Schließfalte (26) berühren.

2. Herstellungsverfahren nach Anspruch 1, **dadurch gekennzeichnet, dass** die Schließfalten (26) in Ebenen liegen, die die Bohrerachse (2) enthalten und mittig zwischen benachbarten Stegen (39) angeordnet sind.

3. Herstellungsverfahren nach Anspruch 1 oder 2, **dadurch gekennzeichnet, dass** in dem Querschnitt eine Fläche des ersten Abschnitts (42) geringer als eine Fläche des zweiten Abschnitts (43) ist.

4. Herstellungsverfahren nach einem der vorhergehenden Ansprüche, **dadurch gekennzeichnet, dass** die Höhe (40) der Stege (39) wenigstens 20 % größer und höchstens 100 % größer als die Höhe (20) der helixförmigen Segmente ist.

5. Herstellungsverfahren nach einem der vorhergehenden Ansprüche, **dadurch gekennzeichnet, dass** die Anzahl der Stege (39) gleich oder größer der Anzahl der Wendelrücken (15) ist.

6. Wendelbohrer (1) mit einem Bohrkopf (3) und einer Wendel (4), die einen eine Bohrerachse (2) definierenden zylindrischen Kern (38) und eine Anzahl mit dem Kern (38) verbundener helixförmiger Wendelstege (13) aufweist, wobei die Wendelstege (13) jeweils aus mehreren Segmenten gebildet sind, die einander entlang parallel zu der Bohrerachse (2) verlaufender Schließfalten (26) berühren.

7. Wendelbohrer (1) nach Anspruch 6, **dadurch gekennzeichnet, dass** jede der Schließfalten in einer die Bohrerachse (2) enthaltenden Ebene liegt.

8. Wendelbohrer (1) nach Anspruch 6 oder 7, **dadurch gekennzeichnet, dass** eine Höhe (40) der Schließfalte (26) gleich der Höhe (40) des Wendelstegs ist.
